# EUROPEAN PATENT APPLICATION

(11) **EP 0 801 008 A1**
(43) Date of publication of application: **15.10.1997**
(21) Application number: 97201031.8
(22) Date of filing: 10.04.1997
(51) Int. Cl.: B65D 65/38, B29C 70/02

(54) **Containers made of mouldable material**

(30) Priority: 11.04.1996 DE 19614282
(71) Applicant: DSM RESINS B.V., 8022 AW Zwolle (NL)
(72) Inventor: Buhl, Dieter, 67227 Frankenthal (DE); Eckel, Ägidius, 67150 Niederkirchen (DE); Zwecker, Joachim, 69469 Weinheim (DE); Folda, Thomas, 67433 Neustadt-Lachen (DE)
(74) Representative: Dorrestijn, Antoon

(57) **Abstract**

The invention relates to receptacles and other devices for transport and storage of industrial goods. They consist of a cured phenolic or melamine resin, preferably reinforced with glass fibres and filled with aluminiumoxidetrihydrate. aluminium. oxide. hydrate. filler.

## Description

The invention relates to receptacles and other devices for transport and storage of industrial goods, such as machine parts, components of electrical equipment, automobile parts, but also victuals, drink bottles or cans. The invention relates in particular to small-scale carriers, as specified in DIN 30 820 and in VDA Recommendation 4500.

Such receptacles have so far mostly been made of polyethylene or polypropylene, the fire behaviour of which is insufficient for many applications, however. It has been found now that small-scale carriers on the basis of phenolic resins and melamine resins show a much better fire behaviour, in combination with excellent mechanical properties, such as stability, strength and stiffness.

Small-scale carriers in general consist of a bottom plate and side walls which can be closed or interrupted or comprise stays or stiffening ribs. The goods to be transported are put inside this box-shaped structure. In many cases the small-scale carrier may also be provided with a cover plate. Further, carrying aids such as handles may be present. The small-scale carrier substantially consists of the cured phenolic resin or melamine resin, but it is not excluded that certain component parts are made of other materials, e.g. metal. Other accessories for the transport and storage of goods are for instance covers, insert bottoms, partitioning walls, racks and pallets.

Phenolic resins are condensation products of phenol, cresols and/or xylols, and formaldehyde. They are available either in the form of novolaks, as hard, meltable resins, or in the form of resoles, as water-soluble resins. Curing of these resins is attended by post-condensation and three-dimensional crosslinking. They can be compression-moulded or cast to moulded articles; this involves either thermal curing at 140°C to 180°C or catalytic curing with the aid of hexamethylenetetramine or acids.

Melamine resins are condensation products of melamine and formaldehyde; they are available in the form of a highly concentrated solution or as a powder. They can also be processed by casting or compression-moulding, which involves curing at temperatures of 120°C to 160°C. The curing temperature and the curing time can be reduced through application of acid catalysts.

The phenolic or melamine resins used according to the invention generally contain fillers, the preferred filler in the present case being in particular, in addition to chalk, aluminiumoxidetrihydrate, Al₂O₃.3H₂O, in amounts of 0 to 60, preferably 10 to 40 wt.%. The resins further comprise the usual inhibitors and acid catalysts which accelerate the curing process. Glass fibres in amounts of 5 to 50 wt.% are used as reinforcing agent.

The receptacles and devices are characterized by excellent mechanical properties and a good fire behaviour.

By 'parts' in the following example, parts by weight are meant.

### Formulation of SMC

- 100: parts of phenolic resin, of resole type (PLYOPHEN 23-8037-VP/2, from Reichhold)
- 18: parts of catalyst/thickening system (regulator ERI-21 K, from Reichhold)
- 3: parts of magnesium paste (LUVATOL MK-35)
- 56: parts of aluminiumoxidetrihydrate as filler (MARTINAL ON - 310)
- 49: parts of chalk as filler (CALCIDAR 5)

### Preparation of SMC

Glass fibres (VETROTEX textile glass roving P 276) were intermingled with the above formulation, resulting in a glass content of 30-33 wt.%. The compound was allowed to thicken for one week at room temperature.

### Production of moulded articles

The SMC was compression-moulded to a moulded article at 155°C and 100 bar, the curing time being 30 seconds.

## Claims

1. Receptacles and devices for transport and storage of industrial goods, characterized in that they substantially consist of cured phenolic resins or melamine resins.

2. Receptacles and devices according to claim 1, characterized in that the moulding compounds comprise 5 to 50 wt.% of glass fibres.

3. Receptacles and devices according to claim 1, characterized in that the moulding compounds comprise 0 to 60 wt.% of aluminiumoxidetrihydrate.
